(19) Europäisches Patentamt / European Patent Office / Office européen des brevets

(11) **EP 4 357 466 B1**

(12) **EUROPEAN PATENT SPECIFICATION**

(45) Date of publication and mention
of the grant of the patent:
**26.11.2025  Bulletin 2025/48**

(21) Application number: **22828113.5**

(22) Date of filing: **23.05.2022**

(51) International Patent Classification (IPC):
**C21B 13/00** (2006.01)    **F27D 17/00** (2025.01)
**C21B 13/02** (2006.01)

(52) Cooperative Patent Classification (CPC):
**C21B 13/0073; C21B 13/02; F27D 17/00;**
C21B 2100/22; C21B 2100/26; C21B 2100/282;
C21B 2100/44; Y02P 10/143

(86) International application number:
**PCT/JP2022/021161**

(87) International publication number:
**WO 2022/270194 (29.12.2022 Gazette 2022/52)**

(54) **METHOD FOR PRODUCING REDUCED IRON**

VERFAHREN ZUR HERSTELLUNG VON REDUZIERTEM EISEN

PROCÉDÉ DE PRODUCTION DE FER RÉDUIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2021   JP 2021105176**

(43) Date of publication of application:
**24.04.2024   Bulletin 2024/17**

(73) Proprietor: **JFE Steel Corporation
Tokyo 100-0011 (JP)**

(72) Inventors:
• **TERUI, Koki
Tokyo 100-0011 (JP)**
• **TAKAHASHI, Koichi
Tokyo 100-0011 (JP)**
• **MORIYA, Kota
Tokyo 100-0011 (JP)**
• **OZAWA, Sumito
Tokyo 100-0011 (JP)**

(74) Representative: **Hoffmann Eitle
Patent- und Rechtsanwälte PartmbB
Arabellastraße 30
81925 München (DE)**

(56) References cited:
JP-A- 2011 225 969      JP-A- 2012 007 213
US-A- 4 880 459         US-A1- 2016 168 653
US-A1- 2018 371 560

**Description**

TECHNICAL FIELD

This disclosure relates to a method for producing reduced iron.

BACKGROUND

In recent years, there has been a strong demand for energy conservation in steelworks due to global environmental issues and fossil fuel depletion issues.

The raw material for iron is mainly iron oxide, and a reduction process is essential to reduce the iron oxide. The most widespread and common reduction process worldwide is blast furnace. In a blast furnace, coke and pulverized coal react with oxygen in hot blast (air that has been heated to about 1200 °C) at a tuyere to produce CO and $H_2$ gases (reducing gas), and the reducing gas is used to reduce iron ore and other materials in the furnace. Recent improvements in blast furnace operation technology have reduced the reducing agent rate (the amount of coke and pulverized coal used to produce one ton of hot metal) to about 500 kg/t. However, the reducing agent rate has almost reached the lower limit, and it cannot be expected to further reduce the reducing agent rate greatly.

On the other hand, in regions where natural gas is produced, a method is often used to produce reduced iron where a vertical reducing furnace is charged with massive iron ore such as sintered ore or pellets as an iron oxide raw material, and reducing gas containing hydrogen and carbon monoxide is blown in to reduce the iron oxide raw material to produce reduced iron. In this method, natural gas or the like is used as a raw material gas for reducing gas. The raw material gas is heated and reformed in a heating and reforming unit together with furnace gas discharged from the top of the reducing furnace to produce reducing gas. The produced reducing gas is blown into the reducing furnace and reacts with the iron oxide raw material supplied from the top of the reducing furnace, and the iron oxide is reduced to obtain reduced iron. The produced reduced iron is cooled in an area below the position where the reducing gas is blown into the reducing furnace, and then the reduced iron is discharged from the bottom of the reducing furnace.

The gas after being used for reduction of iron oxide is discharged from the top of the reducing furnace as furnace gas, and after dust removal and cooling, a part of the gas is sent to the heating and reforming unit as a raw material for reformed gas. The remaining furnace gas is used for heating and used as fuel gas for the heating and reforming unit. The remaining furnace gas used for heating and used as fuel gas for the heating and reforming unit is usually discharged out of the system.

As an example of the above-described reduced iron production process, JP 2017-88912 A (PTL 1) describes that exhaust gas from a reducing furnace and natural gas are reformed in a reformer to produce reducing gas consisting mainly of CO and $H_2$ gases, and this reducing gas is blown into a reducing furnace to reduce iron oxide inside the reducing furnace to produce reduced iron.

Further, JP 2016-529384 A (PTL 2) describes a method where coke oven gas and furnace gas of a reducing furnace from which $CO_2$ has been removed are reformed to produce reducing gas, and the reducing gas is blown into a reducing furnace to produce reduced iron. Additionally, PTL 3 and PTL 4 disclose an alternative method for producing reduced iron wherein a steam is injected to modulate the hydrogen formation in the reducing gas.

CITATION LIST

Patent Literature

PTL 1: JP 2017-88912 A
PTL 2: JP 2016-529384 A
PTL 3: US 4 880 459 A
PTL 4: US 2016/168653 A1

SUMMARY

(Technical Problem)

The reduced iron production method described in PTL 1 uses natural gas to produce reducing gas, so that a certain amount of $CO_2$ emissions cannot be avoided, although it is lower than that of a blast furnace.

The method described in PTL 2 uses coke oven gas or converter gas produced in steelworks to produce reducing gas. Since the coke oven gas and converter gas are essential as fuel gas for downstream processes such as heating furnace and annealing furnace in integrated steelworks, their diversion to the reduced iron production process will cause fuel gas shortage in the downstream processes. As a result, natural gas is eventually supplied externally to compensate for the shortage of gas in the downstream processes, and reduction in $CO_2$ emissions is not realized and remains an issue.

It could thus be helpful to provide a method that can realize energy conservation and reduction in $CO_2$ emissions when producing reduced iron with iron oxide.

(Solution to Problem)

We have developed a system having an iron oxide charging process in which iron oxide is charged into a reducing furnace, a reducing gas blowing process in which reducing gas is blown into the reducing furnace, a reduction process in which the iron oxide is reduced with the reducing gas in the reducing furnace, a methane synthesis process in which methane is synthesized from hydrogen gas and a part of furnace gas discharged from the top of the reducing furnace, and a gas reforming process in which the methane gas and the furnace gas excluding those supplied to the methane synthesis process are used as a raw material gas, and the raw material gas is heated and reformed into the reducing gas, to realize energy conservation and reduction in $CO_2$ emissions. In this system, the furnace gas is circulated and reused. Further, in order to achieve stable operation in this system, it is necessary to balance the gases in the system so that the mass balance in this system is healthy, that is, the composition ratio (volume ratio) $H_2/CO$ of $H_2$ and $CO$ in the reducing gas supplied to the reducing furnace is always maintained at a predetermined value without any fluctuation.

However, when the grade of iron oxide (massive ore) as a raw material for reduced iron changes, the composition of the furnace gas released from the top of the furnace changes, rendering it difficult to maintain a healthy mass balance as described above. Further, changes in performance due to continuous operation of a methane synthesizing unit in the methane synthesis process and a heating and reforming unit in the gas reforming process and the like cause changes in the gas composition at outlets of the methane synthesizing unit and the heating and reforming unit, which results in changes in the ratio $H_2/CO$ of $H_2$ and $CO$ in the reducing gas and renders it difficult to maintain a healthy mass balance as described above.

We have diligently investigated ways to maintain a healthy mass balance in the above-described system and have newly discovered that it is important to maintain an appropriate gas balance between the methane synthesis process and the gas reforming process in accordance with changes in the composition of the reducing gas blown into the reducing furnace, thereby completing the present disclosure.

We thus provide the following.

[1] A method for producing reduced iron, comprising

an iron oxide charging process in which iron oxide is charged into a reducing furnace,
a reducing gas blowing process in which reducing gas is blown into the reducing furnace,
a reduction process in which the iron oxide is reduced with the reducing gas in the reducing furnace,
a methane synthesis process in which a gas containing methane as a main component is synthesized from hydrogen gas and a part of furnace gas discharged from top of the reducing furnace, and
a gas reforming process in which the methane gas and furnace gas excluding those supplied to the methane synthesis process are used as a raw material gas, and the raw material gas is heated and reformed into the reducing gas, wherein
according to changes in a ratio $H_2/CO$ of $H_2$ and $CO$ in reducing gas blown into the reducing furnace, an amount of furnace gas $V_1$ supplied to the methane synthesis process and an amount of water vapor $V_w$ in the raw material gas supplied to the gas reforming process are adjusted to suppress the changes, and a mass balance of $H_2$ and $CO$ in processes from the iron oxide charging process to the reduction process is controlled.

[2] The method for producing reduced iron according to aspect [1], wherein when a change in the ratio $H_2/CO$ is an increase in the value of the ratio $H_2/CO$, the amount of water vapor $V_w$ and the amount of furnace gas $V_1$ are decreased.

[3] The method for producing reduced iron according to aspect [1], wherein when a change in the ratio $H_2/CO$ is a decrease in the value of the ratio $H_2/CO$, the amount of water vapor $V_w$ and the amount of furnace gas $V_1$ are increased.

[4] The method for producing reduced iron according to any one of aspects [1] to [3], wherein a ratio X in percentage of the amount of furnace gas $V_1$ supplied to the methane synthesis process to an amount of the furnace gas formed $V_t$, and a ratio Y in percentage of the amount of water vapor $V_w$ in the raw material gas supplied to the gas reforming process to an amount of the furnace gas formed $V_t$ satisfy the following expression (1),

$$aX^2 + bX + c \leq Y \leq 100 \qquad (1)$$

where a, b and c are arbitrary values determined by operating conditions of the reducing furnace.

(Advantageous Effect)

According to the present disclosure, it is possible to realize stable operation under a healthy mass balance in a method for producing reduced iron in a closed system that circulates and reuses furnace gas, where $CO_2$-free hydrogen is supplied from the outside to furnace gas of a reducing furnace to synthesize regenerated methane, and the regenerated methane is used to produce reducing gas.

BRIEF DESCRIPTION OF THE DRAWINGS

In the accompanying drawings:

FIG. 1 illustrates reduced iron production processes using a general shaft furnace;
FIG. 2 illustrates the reduced iron production processes of the present disclosure;
FIG. 3 illustrates the relationship between an amount of water vapor Vw and an amount of furnace gas $V_1$ for methane synthesis, which is adjusted when the composition of reducing gas changes; and
FIG. 4 illustrates the results of an experiment that investigates the relationship between the percentage Y of an amount of water vapor Vw used in a reforming process to an amount of furnace gas Vt and the percentage X of an amount of gas $V_1$ used for methane gas synthesis to an amount of furnace gas Vt.

DETAILED DESCRIPTION

The following describes the method of the present disclosure in detail with reference to the drawings. First, conventional reduced iron production processes will be described, in comparison with the method of the present disclosure.

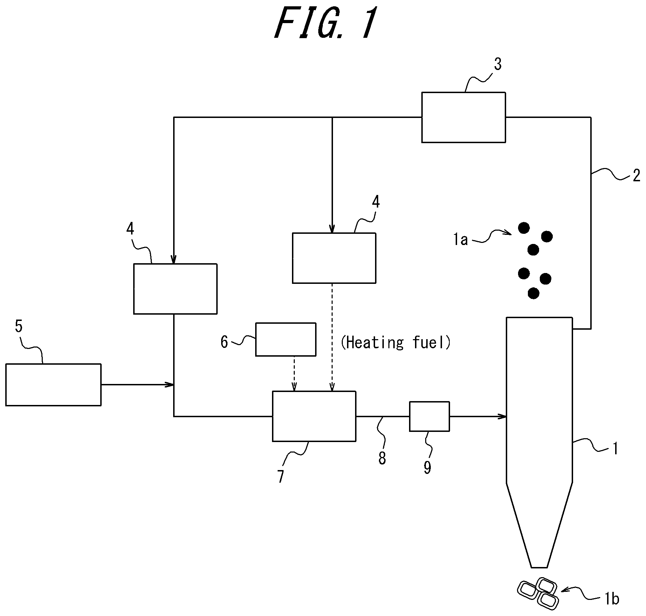

FIG. 1 illustrates the configuration of conventional reduced iron production processes using a shaft-type reducing furnace. In FIG. 1, reference sign 1 is a reducing furnace, 1a is iron oxide, 1b is reduced iron, 2 is furnace gas discharged from the reducing furnace 1, 3 is a dust removing unit for the furnace gas 2, 4 is a dehydrating unit, 5 is natural gas supplied from outside, 6 is air, 7 is a heating and reforming unit that heats or thermally reforms the furnace gas 2 and the air 6 to produce reducing gas 8 containing carbon monoxide gas and hydrogen gas, and 9 is a reducing gas blowing unit that supplies reducing gas to the reducing furnace 1.

A massive oxide iron raw material 1a such sintered ore or pellets is charged from the top of the reducing furnace 1, which is the center of the reduced iron production processes, and gradually lowered. High-temperature reducing gas 8 is blown in from the middle of the furnace to reduce the oxide iron raw material 1a, and reduced iron 1b is discharged from the bottom of the furnace. At this time, furnace gas 2 containing mainly CO, $CO_2$, $H_2$ and $H_2O$ is discharged from the top of the furnace. The furnace gas 2 is subjected to dust removal in the dust removing unit 3, and a part of the gas is sent to the heating and reforming unit 7 as a raw material gas after moisture adjustment. A gas containing hydrocarbon, such as natural gas 5, is supplied to the heating and reforming unit 7 and heated therein together with the moisture-adjusted furnace gas 2. In the heating and reforming unit 7, a reforming reaction occurs to form high-temperature reducing gas 8 containing mainly CO and $H_2$ gases, which is to be blown into the reducing furnace 1. The remaining of the furnace gas 2 is used as fuel for heating a combustion chamber of the heating and reforming unit 7 after dehydration.

[Embodiment]

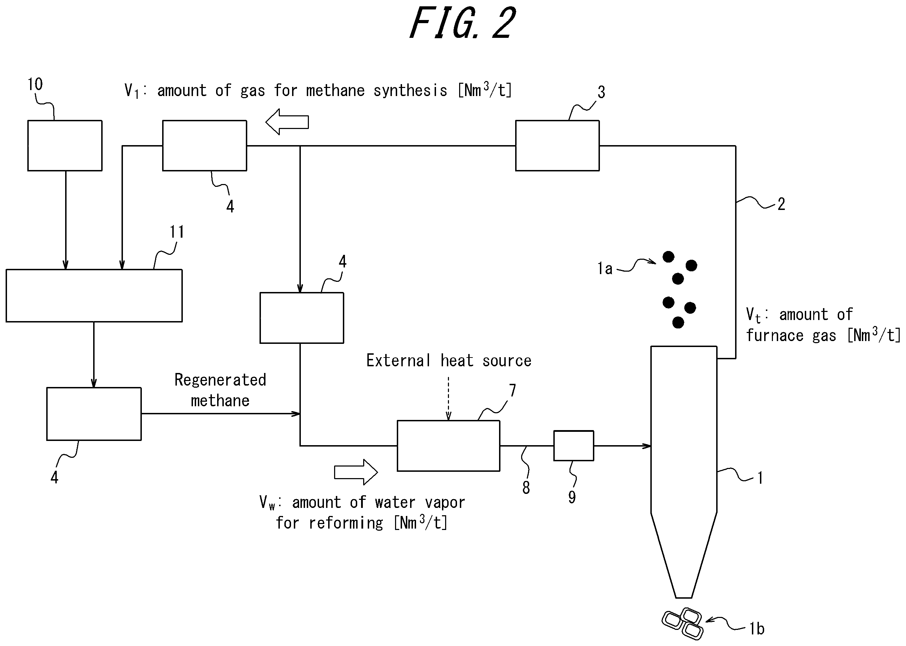

In comparison with the above conventional processes illustrated in FIG. 1, the present disclosure uses regenerated methane formed in a methane synthesis reactor in the processes instead of externally supplied hydrocarbon gas such as the above-described natural gas 5, as illustrated in FIG. 2. In other words, in the configuration of the reduced iron production processes illustrated in FIG. 2, a new methane synthesizing unit 11 is provided for synthesizing methane from the furnace gas 2 and hydrogen 10. Regenerated methane formed in the methane synthesizing unit 11 is supplied to the heating and reforming unit 7 to be used as a raw material gas for the reducing gas 8.

In this case, the raw material for methane synthesis in the methane synthesizing unit 11 is externally supplied hydrogen gas 10 and gas containing CO, $CO_2$ and hydrocarbon. The gas containing CO, $CO_2$ and hydrocarbon may be any gas available in steelworks. For example, as illustrated in FIG. 2, a part of the furnace gas 2 formed in the reducing furnace 1 that is used for heating the heating and reforming unit 7 in the conventional processes in FIG. 1 is blown into the methane synthesizing unit 11 for methane synthesis and serves as a raw material for regenerated methane. This change in the flow of the furnace gas 2 in the system allows the synthesis of a required amount of regenerated methane for the heating and reforming unit 7. In this case, since no fuel is supplied for heating the heating and reforming unit 7, an external $CO_2$-free heat source, such as an external heat source using $CO_2$-free electricity, can be used as an alternative. In this method, if $CO_2$-free electricity is used for heating the heating and reforming unit 7 and producing hydrogen, $CO_2$ emissions can be reduced to zero theoretically.

The regenerated methane synthesized in the methane synthesizing unit 11 is mixed with the furnace gas 2 that has undergone dehydration and then dust removal and partial dehydration, and the mixture is supplied to the heating and reforming unit 7, in which it is reformed into a gas containing mainly $H_2$ and CO and blown into the reducing furnace 1 as reducing gas 8 for the production of reduced iron.

What is important in the above reduced iron production processes in the closed system illustrated in FIG. 2 is, according to fluctuations in the composition (ratio $H_2$/CO) of the reducing gas that is blown into the reducing furnace, to immediately suppress the fluctuations in the composition (ratio $H_2$/CO) of the reducing gas by maintaining a gas balance between the methane synthesis process and the gas reforming process. As described above, the composition of the furnace gas released from the top of the reducing furnace changes when the grade of the raw iron oxide changes, for example. Further, the ratio at which the furnace gas after dust removal is divided into raw material gas and gas for methane synthesis changes depending on the amount of gas required for forming reducing gas in the subsequent gas reforming process, that is, the amount of regenerated methane gas to be sent to the gas reforming process and the amount of water vapor in the furnace gas. Therefore, it is necessary to estimate the amount of gas required in each process to satisfy the mass balance described above.

Therefore, in the present disclosure, reduced iron is produced under a healthy mass balance as described above by adjusting the amount of furnace gas $V_1$ supplied to the methane synthesis process and the amount of water vapor Vw in the raw material gas supplied to the gas reforming process according to the fluctuations in the ratio $H_2$/CO in the reducing gas blown into the reducing furnace. The following is a detailed description of operation methods under a healthy mass balance in the method of the present disclosure.

The $H_2$ and CO in the reducing gas blown into the reducing furnace are synthesized by the reactions of $CH_4$ with $CO_2$ and $H_2O$ in the heating and reforming unit 7 in front of the reducing furnace 1 illustrated in FIG 2. The reactions are represented by the following formulas (i) and (ii).

$$CH_4 + CO_2 \rightarrow 2CO + 2H_2 \qquad (i)$$

$$CH_4 + H_2O \rightarrow CO + 3H_2 \qquad (ii)$$

It is understood from the formulas (i) and (ii) that the raw material gas for reforming is $CH_4$, $CO_2$, and $H_2O$. Among these, the amount of $H_2O$ supplied to the heating and reforming unit can be adjusted by condensation removal through gas cooling or by adding $H_2O$ itself to the gas. On the other hand, the $CH_4$ is synthesized by supplying a part of the furnace gas discharged from the reducing furnace to the methane synthesizing unit. From the above formula (ii), it is understood that if the amount of water vapor ($H_2O$) Vw [$Nm^3$/t] supplied to the heating and reforming unit increases, it is necessary to increase the amount of $CH_4$ to be reacted with $H_2O$. To increase the amount of $CH_4$, it is necessary to increase the amount of furnace gas $V_1$ [$Nm^3$/t] supplied to the methane synthesizing unit that is a part of the furnace gas discharged from the reducing furnace. Therefore, Vw and $V_1$ are positively related.

For example, the following describes a case where the amount of $CH_4$ formed decreases due to a decrease in the reaction rate of the methane synthesizing unit. If the operation continues in this case, the amount of $CH_4$ supplied to the heating and reforming unit also decreases, which decreases the amount of CO in the reducing gas. As a result, the ratio of $H_2$ to $H_2$ and C ($H_2$ ratio) in the reducing gas increases. As described above, it is necessary to keep the composition ratio (volume ratio) $H_2$/CO of $H_2$ and CO in the reducing gas blown into the reducing furnace constant, so that the $H_2$ ratio needs to be decreased. Therefore, to suppress the formation of CO and $H_2$ by the reaction indicated in the above formula (ii), it is necessary to decrease the amount of water vapor Vw supplied to the heating and reforming unit and to decrease the amount of furnace gas $V_1$ supplied to the methane synthesis process.

For another example, the following describes a case where the $CO_2$ concentration in the furnace gas Vt increases due to a change in the grade of massive iron oxide as a raw material for reduced iron. If the operation continues in this case, the amount of $CO_2$ supplied to the methane synthesizing unit or the heating and reforming unit also increases, which increases the amount of CO in the reducing gas. As a result, the ratio of CO to $H_2$ and CO (CO ratio) in the reducing gas increases. As described above, it is necessary to keep the composition ratio (volume ratio) $H_2$/CO of $H_2$ and CO in the reducing gas blown into the reducing furnace constant, so that the $H_2$ ratio needs to be increased. Therefore, to accelerate the formation of CO and $H_2$ by the reaction indicated in the above formula (ii), it is necessary to increase the amount of water vapor Vw supplied to the heating and reforming unit and to increase the amount of furnace gas V1 supplied to the methane synthesis process.

The amount of reducing gas supplied to the reducing furnace changes because of these operations. If the change of the amount of reducing gas is too large, stable operation of the reducing furnace will be difficult. Therefore, it is necessary to pay attention to change in the amount of reducing gas. Specifically, a large decrease in the amount of reducing gas results in deterioration in productivity and deterioration in product quality. On the other hand, if the amount of reducing gas increases greatly, the ventilation resistance of the gas inside the furnace increases, and the raw material (pellets) inside the furnace will not drop.

We investigated a suitable amount of reducing gas to avoid the above disadvantages and found that a suitable flow rate of the reducing gas is 1500 $Nm^3/t$ or more and 3500 $Nm^3/t$ or less.

Further, we have made a diligent study on a simple method to adjust the amount of water vapor Vw and the gas $V_1$ for methane synthesis.

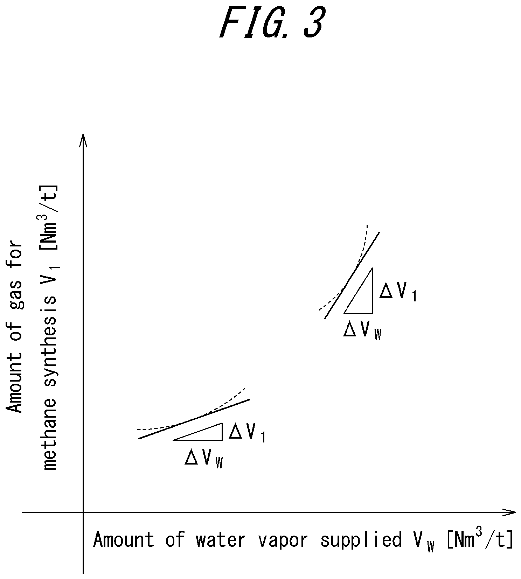

First, the relationship between the amount of water vapor Vw and the amount of furnace gas $V_1$ for methane synthesis, which is adjusted when the composition of the reducing gas changes as described above, will be explained with reference to FIG. 3. FIG. 3 schematically illustrates the relationship between Vw and $V_1$ in the processes of the present disclosure, with Vw plotted on the horizontal axis and $V_1$ plotted on the vertical axis. As described above, when Vw begins to increase, a large amount of $H_2$ is formed by the reaction in the formula (ii). As a result, it is necessary to increase the amount of CO formed by the reaction indicated in the formula (i) to maintain the ratio $H_2/CO$ of the reducing gas, so that the amount of $V_1$ increases. In other words, a ratio of the increment of gas for methane synthesis $\Delta V_1$ to the increment of amount of water vapor $\Delta Vw$ becomes steep. On the other hand, when the amount of water vapor Vw begins to decrease, formation of a large amount of $H_2$ according to the reaction indicated in the formula (ii) is suppressed, so that there will be no large fluctuation in the amount of CO required for maintaining the predetermined ratio $H_2/CO$. Therefore, a ratio of the increment of gas for methane synthesis $\Delta V_1$ to the increment of amount of water vapor $\Delta Vw$ becomes slow. Since the amount of change (differential value) in the relationship between Vw and $V_1$ changes depending on the value of Vw, it is expected that the relationship between Vw and $V_1$ is expressed by a nonlinear function.

We performed numerical calculations of the mass balance in the processes to identify a nonlinear function that represents the relationship between Vw and $V_1$. The calculations of the mass balance were simulated using commercially available software. After setting the blast gas flow rate and the ratio $H_2/CO$ in the blast gas flow rate and calculating the composition in the furnace gas, the amount of water vapor Vw supplied from the furnace gas to the heating and reforming unit was arbitrarily determined. The amount of methane synthesized in the methane synthesizing unit and the amounts of CO and $H_2$ synthesized in the heating and reforming unit were calculated, respectively, and calculations were performed by successively changing the amount of supplied water vapor Vw so that the ratio $H_2/CO$ composition in the reducing gas obtained from these results was equal to the initial setting value. The calculations were performed until the ratio $H_2/CO$ obtained from the calculation was equal to the set ratio $H_2/CO$.

Although the increment of gas for methane synthesis $\Delta V_1$ with respect to the increment of amount of water vapor $\Delta Vw$ is steep or slow depending on the range of the amount of water vapor Vw, as described above and as illustrated in FIG. 3, it is basically estimated to be a positive value. Therefore, a ratio of the increment of gas for methane synthesis $\Delta V_1$ to the increment of amount of water vapor $\Delta Vw$, which is the differential value, is a positive value as indicated below.

$$dV_1/dVw > 0$$

When the percentage of the amount of furnace gas $V_1$ for methane synthesis (the amount of furnace gas supplied to the methane reacting unit) to the amount of furnace gas Vt [$Nm^3/t$] ($V_1/Vt \times 100$) is represented by X and the percentage of the amount of water vapor Vw to the amount of furnace gas Vt [$Nm^3/t$] ($Vw/Vt \times 100$) is represented by Y, the above expression can be expressed as follows assuming that there is no large fluctuation in the amount of furnace gas Vt.

$$dV_1/dVw = dY/dX > 0$$

Although various functions can be considered as the format of the differential value dY/dX, it is expressed by the following linear expression from the viewpoints of always taking a positive value, assuming no periodicity in the value, the increment of $\Delta V_1$ gradually increasing with respect to the increment of $\Delta Vw$ as illustrated in FIG. 3, and ease of handling.

$$dY/dX = \alpha X + \beta \ (\alpha > 0, \text{ and } \beta > 0)$$

The functional form of Y can be obtained by integrating the above expression.

$$\int (dY/dX)dX = \int (\alpha X + \beta)dX$$

$$Y - Y_0 = \alpha/2X^2 + \beta X + \gamma$$

To summarize, Y is expected to be expressed as a quadratic function of X as follows.

$$Y = aX^2 + bX + c$$

(where a, b, and c are positive constants)

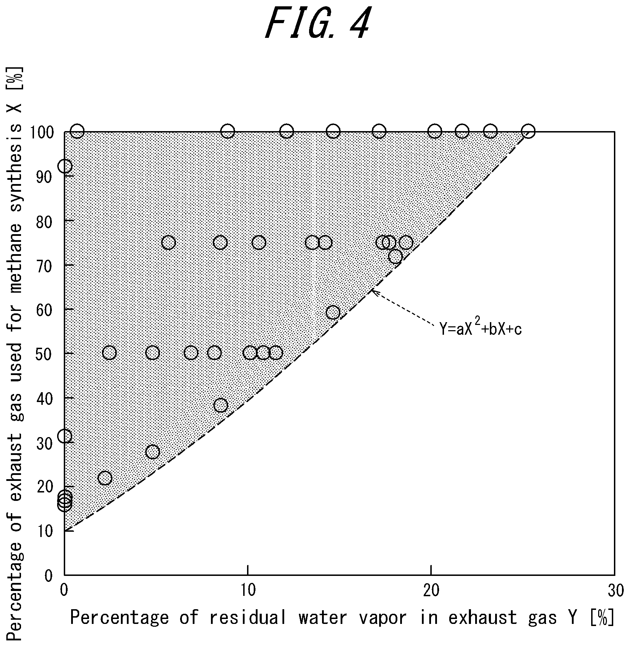

Table 1 lists the results of the above calculations where the reducing gas flow rate is 2200 and $0.5 \leq H_2/CO \leq 4$. FIG. 4 illustrates a summary of the calculation results listed in Table 1, where the percentage of the amount of water vapor Vw to the amount of furnace gas Vt [$Nm^3/t$] (Vw/Vt $\times$ 100) is represented by Y, and the percentage of the amount of furnace gas $V_1$ for methane synthesis to the amount of furnace gas Vt [$Nm^3/t$] ($V_1$/Vt $\times$ 100) is represented by X.

[Table 1]

Table 1

| Amount of water vapor Vw [$Nm^3/t$] | Amount of furnace gas $V_1$ for methane synthesis [$Nm^3/t$] | Amount of furnace gas Vt [$Nm^3/t$] | Reducing gas $H_2$/CO | Y (Vw/Vt) [%] | X ($V_1$/Vt) [%] | Amount of hydrogen externally added [$Nm^3/t$] |
|---|---|---|---|---|---|---|
| 15 | 2181 | 2200 | 0.5 | 0.7 | 100 | 455 |
| 0 | 2009 | 2200 | 0.5 | 0.0 | 92 | 455 |
| 194 | 2181 | 2200 | 1.0 | 8.8 | 100 | 455 |
| 123 | 1636 | 2200 | 1.0 | 5.6 | 75 | 455 |
| 53 | 1091 | 2200 | 1.0 | 2.4 | 50 | 455 |
| 0 | 685 | 2200 | 1.0 | 0.0 | 31 | 455 |
| 264 | 2181 | 2200 | 1.3 | 12.0 | 100 | 455 |
| 184 | 1636 | 2200 | 1.3 | 8.4 | 75 | 455 |
| 105 | 1091 | 2200 | 1.3 | 4.8 | 50 | 455 |
| 48 | 477 | 2200 | 1.3 | 2.2 | 22 | 455 |
| 0 | 388 | 2200 | 1.3 | 0.0 | 18 | 455 |
| 318 | 2181 | 2200 | 1.6 | 14.5 | 100 | 455 |
| 232 | 1636 | 2200 | 1.6 | 10.5 | 75 | 455 |
| 150 | 1091 | 2200 | 1.6 | 6.8 | 50 | 455 |
| 104 | 605 | 2200 | 1.6 | 4.7 | 28 | 455 |
| 0 | 384 | 2200 | 1.6 | 0.0 | 18 | 455 |
| 374 | 2181 | 2200 | 2.0 | 17.0 | 100 | 455 |
| 293 | 1636 | 2200 | 2.0 | 13.3 | 75 | 455 |
| 220 | 1091 | 2200 | 2.0 | 10.0 | 50 | 455 |
| 186 | 835 | 2200 | 2.0 | 8.4 | 38 | 455 |
| 0 | 378 | 2200 | 2.0 | 0.0 | 17 | 455 |
| 471 | 2181 | 2200 | 2.5 | 21.4 | 100 | 455 |
| 378 | 1636 | 2200 | 2.5 | 17.2 | 75 | 455 |
| 319 | 1290 | 2200 | 2.5 | 14.5 | 59 | 455 |
| 250 | 1091 | 2200 | 2.5 | 11.4 | 50 | 455 |

(continued)

| Amount of water vapor Vw [Nm³/t] | Amount of furnace gas V₁ for methane synthesis [Nm³/t] | Amount of furnace gas Vt [Nm³/t] | Reducing gas H₂/CO | Y (Vw/Vt) [%] | X (V₁/Vt) [%] | Amount of hydrogen externally added [Nm³/t] |
|---|---|---|---|---|---|---|
| 0 | 371 | 2200 | 2.5 | 0.0 | 17 | 455 |
| 505 | 2181 | 2200 | 2.7 | 23.0 | 100 | 455 |
| 406 | 1636 | 2200 | 2.7 | 18.4 | 75 | 455 |
| 393 | 1567 | 2200 | 2.7 | 17.9 | 72 | 455 |
| 237 | 1091 | 2200 | 2.7 | 10.8 | 50 | 455 |
| 0 | 368 | 2200 | 2.7 | 0.0 | 17 | 455 |
| 550 | 2181 | 2200 | 3.0 | 25.0 | 100 | 455 |
| 385 | 1636 | 2200 | 3.0 | 17.5 | 75 | 455 |
| 220 | 1091 | 2200 | 3.0 | 10.0 | 50 | 455 |
| 0 | 364 | 2200 | 3.0 | 0.0 | 17 | 455 |
| 440 | 2181 | 2200 | 4.0 | 20.0 | 100 | 455 |
| 309 | 1636 | 2200 | 4.0 | 14.0 | 75 | 455 |
| 178 | 1091 | 2200 | 4.0 | 8.1 | 50 | 455 |
| 0 | 349 | 2200 | 4.0 | 0.0 | 16 | 455 |

As described above, the operating range in the processes of the present disclosure is estimated to be expressed as a quadratic function of X, where Y is the percentage of the amount of water vapor Vw to the amount of furnace gas Vt [Nm³/t] (Vw/Vt × 100). FIG. 4 illustrates the results of fitting the operating range as a quadratic function of X. As indicated in FIG. 4, an appropriate operating range for the processes of the present disclosure can be specified using the following expression (1).

$$aX^2 + bX + c \leq Y \leq 100 \qquad (1)$$

In the expression, a, b and c are arbitrary values determined by the operating conditions of the reducing furnace.
For example, when the reducing gas temperature is from 600 °C to 1200 °C and the blowing amount of reducing gas is from 1500 to 3500 Nm³/t, appropriate a, b and c for operation are determined as follows.

$$0.002 \leq a \leq 0.038$$

$$2.6 \leq b \leq 3.3$$

$$10 \leq c \leq 34$$

As described above, when a, b and c are determined for each operation and applied to the above expression (1), an appropriate range of the amount of furnace gas V₁ supplied to the heating and reforming unit with respect to the amount of water vapor (H₂O) Vw in the relevant operation can be obtained. Then, by adjusting Vw and V₁ according this appropriate range, it is possible to perform operation to produce reduced iron under a healthy mass balance in a closed circulation system.

EXAMPLES

The following describes an example of the present disclosure.
The processes of the present disclosure were operated as illustrated in FIG. 2 under conditions where the reducing gas blowing rate was 2200 and the value of the composition ratio (volume ratio) H₂/CO in the reducing gas was 2.0. The gas composition (volume) of the furnace gas in routine operation under these conditions was $H_2$: CO: $CO_2$: $H_2O$ = 48: 30: 9: 14. When the grade of massive ore charged to the reducing furnace decreased, the value of the ratio $H_2$/CO in the reducing gas increased to 2.2, that is, the $H_2$ ratio increased. The degree of reduction reached by a final product also decreased from 91 % at the beginning of the operation to 89 %. Therefore, to restore the value of the ratio $H_2$/CO to 2.0, the amount of water vapor Vw supplied to the heating and reforming unit was decreased from the previous 374 to 355 $Nm^3$/t. As a result, the operation could be maintained with the reducing gas composition being the set value, that is, the value of the ratio $H_2$/CO being 2.0. The degree of reduction reached by a final product was also restored to 91 % as at the beginning of the operation.

REFERENCE SIGNS LIST

| | |
|---|---|
| 1 | reducing furnace |
| 1a | iron oxide |
| 1b | reduced iron |
| 2 | furnace gas |
| 3 | dust removing unit |
| 4 | dehydrating unit |
| 5 | natural gas |
| 6 | air |
| 7 | heating and reforming unit |
| 8 | reducing gas |
| 9 | reducing gas blowing unit |
| 10 | hydrogen |
| 11 | methane synthesizing unit |

**Claims**

1.  A method for producing reduced iron (1b), comprising

    an iron oxide charging process in which iron oxide (a) is charged into a reducing furnace (1),
    a reducing gas blowing process in which reducing gas (8) is blown into the reducing furnace (1),
    a reduction process in which the iron oxide (1a) is reduced with the reducing gas (8) in the reducing furnace (1),
    a methane synthesis process in which a gas containing methane as a main component is synthesized from hydrogen gas and a part of furnace gas (2) discharged from top of the reducing furnace (1), and
    a gas reforming process in which the methane gas and furnace gas (2) excluding those supplied to the methane synthesis process are used as a raw material gas, and the raw material gas is heated and reformed into the reducing gas (8), wherein
    according to changes in a ratio $H_2$/CO of $H_2$ and CO in reducing gas (8) blown into the reducing furnace (1), an amount of furnace gas $V_1$ supplied to the methane synthesis process and an amount of water vapor Vw in the raw material gas supplied to the gas reforming process are adjusted to suppress the changes, and a mass balance of $H_2$ and CO in processes from the iron oxide charging process to the reduction process is controlled.

2.  The method for producing reduced iron (1b) according to claim 1, wherein when a change in the ratio $H_2$/CO is an increase in the value of the ratio $H_2$/CO, the amount of water vapor Vw and the amount of furnace gas $V_1$ are decreased.

3.  The method for producing reduced iron (1b) according to claim 1, wherein when a change in the ratio $H_2$/CO is a decrease in the value of the ratio $H_2$/CO, the amount of water vapor Vw and the amount of furnace gas $V_1$ are increased.

**Patentansprüche**

1.  Verfahren zur Herstellung von reduziertem Eisen (1b), umfassend

    ein Eisenoxid-Chargierverfahren, in dem Eisenoxid (1a) in einen Reduktionsofen (1) chargiert wird,

ein Reduktionsgas-Einblasverfahren, in dem Reduktionsgas (8) in den Reduktionsofen (1) eingeblasen wird,

ein Reduktionsverfahren, in dem das Eisenoxid (1a) mit dem Reduktionsgas (8) in dem Reduktionsofen (1) reduziert wird,

ein Methansyntheseverfahren, in dem ein Gas, das Methan als eine Hauptkomponente enthält, aus Wasserstoffgas und einem Teil eines Ofengases (2), das aus der Spitze des Reduktionsofens (1) austritt, synthetisiert wird, und

ein Gasreformierungsverfahren, in dem das Methangas und das Ofengas (2), mit Ausnahme derjenigen, die dem Methansyntheseverfahren zugeführt werden, als Ausgangsgas verwendet werden und das Ausgangsgas in dem Reduktionsgas (8) erwärmt und reformiert wird, wobei

entsprechend den Änderungen eines Verhältnisses $H_2/CO$ von $H_2$ und CO im Reduktionsgas (8), das in den Reduktionsofen (1) eingeblasen wird, eine Menge an Ofengas $V_1$, das dem Methansyntheseverfahren zugeführt wird, und eine Menge an Wasserdampf Vw im Ausgangsgas, das dem Gasreformierungsverfahren zugeführt wird,

eingestellt werden, um die Änderungen zu unterdrücken, und eine Massenbilanz von $H_2$ und CO in den Verfahren vom Eisenoxid-Chargierverfahren bis zum Reduktionsverfahren gesteuert wird.

2. Verfahren zur Herstellung von reduziertem Eisen (1b) gemäß Anspruch 1, wobei, wenn eine Änderung des Verhältnisses $H_2/CO$ eine Zunahme des Werts des Verhältnisses $H_2/CO$ ist, die Menge an Wasserdampf Vw und die Menge an Ofengas $V_1$ verringert werden.

3. Verfahren zur Herstellung von reduziertem Eisen (1b) gemäß Anspruch 1, wobei, wenn eine Änderung des Verhältnisses $H_2/CO$ eine Verringerung des Werts des Verhältnisses $H_2/CO$ ist, die Menge an Wasserdampf Vw und die Menge an Ofengas $V_1$ erhöht werden.

**Revendications**

1. Procédé de production de fer réduit (1b), comprenant un processus de chargement d'oxyde de fer dans lequel de l'oxyde de fer (1a) est chargé dans un four de réduction (1),

un processus de soufflage de gaz réducteur dans lequel du gaz réducteur (8) est soufflé dans le four de réduction (1),

un processus de réduction dans lequel l'oxyde de fer (1a) est réduit avec le gaz réducteur (8) dans le four de réduction (1),

un processus de synthèse de méthane dans lequel un gaz contenant du méthane comme composant principal est synthétisé à partir d'hydrogène gazeux et d'une partie du gaz de four (2) évacué par le haut du four de réduction (1), et

un processus de reformage de gaz dans lequel le méthane et le gaz de four (2), à l'exclusion de ceux fournis au processus de synthèse de méthane, sont utilisés comme gaz de matière première, et le gaz de matière première est chauffé et reformé en gaz réducteur (8), dans lequel en fonction des variations du rapport $H_2/CO$ entre l'hydrogène et le CO dans le gaz réducteur (8) insufflé dans le four de réduction (1), une quantité de gaz de four $V_1$ fournie au procédé de synthèse du méthane et une quantité de vapeur d'eau Vw dans le gaz de matière première fourni au procédé de reformage du gaz sont ajustées pour supprimer les variations, et un bilan massique de $H_2$ et CO dans les procédés allant du procédé de chargement d'oxyde de fer au procédé de réduction est contrôlé.

2. Le procédé de production de fer réduit (1b) selon la revendication 1, dans lequel, lorsque la variation du rapport $H_2/CO$ est une augmentation de la valeur du rapport $H_2/CO$, la quantité de vapeur d'eau Vw et la quantité de gaz de four $V_1$ sont diminuées.

3. Le procédé de production de fer réduit (1b) selon la revendication 1, dans lequel, lorsque le changement du rapport $H_2/CO$ est une diminution de la valeur du rapport $H_2/CO$, la quantité de vapeur d'eau Vw et la quantité de gaz de four $V_1$ sont augmentées.

FIG. 1

# FIG. 2

$V_1$: amount of gas for methane synthesis [Nm$^3$/t]

$V_t$: amount of furnace gas [Nm$^3$/t]

External heat source

Regenerated methane

$V_w$: amount of water vapor for reforming [Nm$^3$/t]

# FIG. 3

# FIG. 4

**EP 4 357 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017088912 A
- JP 2016529384 A
- US 4880459 A
- US 2016168653 A1